# DEMANDE DE BREVET EUROPEEN

(11) **EP 0 790 141 A1**
(43) Date de publication de la demande: **20.08.1997**
(21) Numéro de dépôt: 97400235.4
(22) Date de dépôt: 03.02.1997
(51) Int. Cl.: B60B 25/22, B60C 15/024, B60B 21/12, B60B 21/06

(54) **Jante de roue à rayons destinée à être équipée d'un pneumatique sans chambre, et roue à rayons ainsi équipée**

(30) Priorité: 19.02.1996 FR 9602015
(71) Demandeur: HUTCHINSON, F-75008 Paris (FR)
(72) Inventeur: Gangloff, Norbert, 45270 Ladon (FR)
(74) Mandataire: Doireau, Marc

(57) **Abrégé**

Jante de roue à rayons destinée à être équipée d'un pneumatique (5) sans chambre, ladite jante (3) étant formée par au moins un anneau comprenant un fond annulaire (9) bordé de deux flancs (10) contre lesquels viennent respectivement en appui les deux talons (12) du pneumatique (5), et équipée de moyens pour assurer au moins l'étanchéité entre les talons (12) du pneumatique (5) et les flancs (10) de la jante (3), caractérisée en ce que lesdits moyens sont constitués par des moyens d'ancrage (15) interposés entre les talons (12) du pneumatique (5) et les flancs (10) de la jante (3), pour assurer l'étanchéité par incrustation des moyens d'ancrage (15) dans les talons (12) du pneumatique sous l'effet de la pression de gonflage.

L'invention s'applique notamment aux roues à rayons de bicyclettes, de VTT et de cyclomoteurs.

## Description

La présente invention concerne une jante de roue à rayons destinée à être équipée d'un pneumatique sans chambre.

A l'heure actuelle, on envisage de plus en plus d'équiper les roues à rayons des bicyclettes, VTT (Vélos Tout Terrain), motocyclettes, etc..., de pneumatiques sans chambre. Pour assurer l'étanchéité, il est notamment connu du document US-A-4,108,232 de rapporter un anneau en un matériau étanche à l'air, en particulier un caoutchouc naturel ou synthétique, autour de la jante et qui recouvre également les flancs de celle-ci.

Cependant, le montage d'un tel dispositif d'étanchéité est une opération délicate qui nécessite l'utilisation d'un outillage particulier, ce qui entraîne un coût de fabrication relativement élevé.

Le but de l'invention est de résoudre ce problème d'étanchéité d'une façon simple, économique et sans avoir recours à un outillage particulier et/ou à du personnel qualifié.

Pour atteindre ce but, l'invention propose une jante de roue à rayons destinée à être équipée d'un pneumatique sans chambre, cette jante étant formée par au moins un anneau comprenant un fond annulaire bordé de deux flancs contre lesquels viennent respectivement en appui les deux talons du pneumatique, et équipée de moyens pour assurer au moins l'étanchéité entre les talons du pneumatique et les flancs de la jante, caractérisée en ce que lesdits moyens sont constitués par des moyens d'ancrage interposés entre les talons du pneumatique et les flancs de la jante, pour assurer l'étanchéité par incrustation des moyens d'ancrage dans les talons du pneumatique sous l'effet de la pression de gonflage.

Avantageusement, les moyens d'ancrage sont usinés sur la face interne des flancs de la jante et sont constitués par une série de dentures circulaires, concentriques et à arêtes vives, par exemple.

Selon un mode de réalisation préférentiel, le fond de la jante comporte également deux bossages circonférentiels en saillie vers l'extérieur et formant chacun une butée pour maintenir en place les talons du pneumatique et assurer l'étanchéité lorsque le pneumatique est soumis à des efforts latéraux.

Selon une autre caractéristique de l'invention, un ruban étanche est rapporté sur la périphérie du fond de jante pour assurer l'étanchéité au niveau des zones de raccordement entre les rayons et la jante.

D'une manière générale, les deux extrémités libres du ruban d'étanchéité viennent de part et d'autre d'une ouverture ménagée dans le fond de jante et dans laquelle vient se monter une valve de gonflage.

Avantageusement, cette valve est constituée par un corps fileté dont une extrémité comporte une collerette en caoutchouc destinée à venir en contact étanche avec le fond de jante et qui est maintenue en appui au moyen d'un écrou vissé sur le corps de valve pour assurer l'étanchéité requise entre la valve et la jante.

L'invention concerne également une roue à rayons pour bicyclette, VTT, cyclomoteur, etc..., équipée d'une telle jante et d'un pneumatique sans chambre.

Selon un avantage important de l'invention, les moyens qui assurent l'étanchéité entre les talons du pneumatique et les flancs de la jante, ne nécessitent aucune opération particulière de montage, puisque cette étanchéité est automatiquement obtenue sous l'effet de la pression de gonflage du pneumatique.

Une telle solution est donc très économique, et la mise en place du ruban d'étanchéité sur la périphérie du fond de jante ne nécessite aucun outillage particulier.

D'autres avantages, caractéristiques et détails de l'invention ressortiront de la description explicative qui va suivre, faite en référence aux dessins annexés donnés uniquement à titre d'exemple et dans lesquels :
- la figure 1 est une demi-vue partielle en coupe d'une roue à rayons et à pneumatique sans chambre, équipée d'une jante selon l'invention,
- la figure 2 est une vue similaire à celle de la figure 1 pour illustrer le montage de la valve de gonflage, et
- la figure 3 est une vue de dessus de la figure 2.

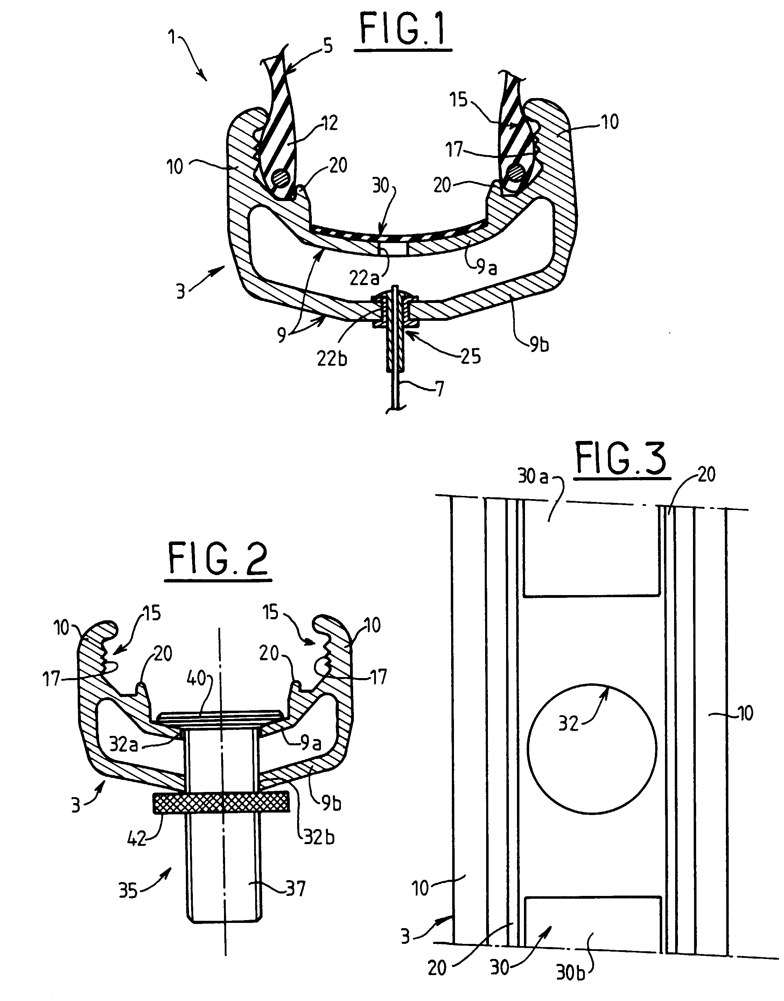

La roue 1 à rayons telle qu'illustrée sur les figures 1 et 2, comprend une jante métallique 3 sur laquelle vient se monter un pneumatique de roulage 5 sans chambre, la jante 3 étant reliée au moyeu de la roue (non représenté) par l'intermédiaire de rayons 7.

La jante 3 se présente sous la forme d'un anneau avec un fond 9 ou fond de jante bordé de deux flancs extérieurs 10 contre lesquels viennent respectivement en appui les deux talons 12 du pneumatique 5.

L'utilisation d'un pneumatique de roulage sans chambre requiert des moyens pour assurer au moins l'étanchéité entre les flancs 10 de la jante 3 et les talons 12 du pneumatique 5.

A cet effet, des moyens d'ancrage 15 sont interposés entre les flancs 10 et les talons 12, pour assurer l'étanchéité par incrustation des moyens d'ancrage 15 dans les talons 12 du pneumatique 5 sous l'effet de la pression de gonflage du pneumatique 5.

Dans l'exemple de réalisation illustré sur les figures 1 et 2, les moyens d'ancrage 15 sont usinés sur les faces internes des flancs 10 et sont constitués par des dentures 17 circulaires, concentriques et à arêtes vives.

Avantageusement, le fond de jante 9 comporte également deux bossages circonférentiels 20 en saillie vers l'extérieur et qui forment chacun une butée pour maintenir en place les talons 12 du pneumatique 5 lorsque celui-ci est soumis à des efforts latéraux importants, et maintenir ainsi l'étanchéité procurée par les moyens d'ancrage 15. De préférence, la distance séparant les faces externes des deux bossages 20 est supérieure à la distance séparant les deux faces internes des deux talons 12, pour forcer les talons 12 à venir se mettre en place dans les gorges annulaires délimitées par les flancs 10 et les bossages 20.

En se reportant à la figure 1, le fond de jante 9 est creux et délimité entre deux parois annulaires concentriques respectivement externe 9a (côté pneumatique 5) et interne 9b (côté rayons 7). Les deux parois 9a et 9b sont respectivement percées de trous 22a et 22b associés deux à deux, chaque paire de trous 22a et 22b étant percée suivant un rayon de la roue 1 pour permettre le montage d'un dispositif 25 auquel est fixée une extrémité d'un rayon 7, d'une façon connue en soi.

Chaque dispositif de fixation 25 est introduit à l'intérieur du fond de jante 9 par un trou 22a formant passage, pour venir se fixer autour du trou associé 22b. L'autre extrémité du rayon 7 est fixée au moyeu de la roue 1 par des moyens non représentés et connus en soi.

Un ruban étanche 30 de faible épaisseur est rapporté sur la périphérie du fond de jante 9 par collage par exemple, pour assurer l'étanchéité au niveau des ouvertures 22a. Le ruban 30 est par exemple en caoutchouc.

En se reportant à la figure 3, les deux extrémités 30a et 30b de ce ruban 30 viennent respectivement au voisinage d'une ouverture 32 ménagée dans le fond de jante 9 et dans laquelle vient se monter une valve de gonflage 35 (figure 2). L'ouverture 32 se décompose en une ouverture 32a percée dans la paroi externe 9a et une ouverture 32b percée dans la paroi interne du fond de jante 9.

La valve de gonflage 35 (figure 2) comprend un corps fileté 37 et, à une extrémité, une collerette 40 en un matériau souple et déformable, tel que du caoutchouc par exemple, ayant un diamètre supérieur à celui de l'ouverture 32.

Au montage, le corps fileté 37 est engagé par l'ouverture 32a du fond de jante 9 jusqu'à ce que la collerette 40 vienne en appui autour de cette ouverture 32a. Sur l'extrémité du corps fileté 37 qui fait saillie au-delà de l'ouverture 32b de la paroi interne 9b du fond de jante 9, on vient rapporter un écrou 42 qui est vissé jusqu'à venir en appui contre la paroi interne 9b du fond de jante 9, pour assurer l'étanchéité entre la collerette 40 formant joint d'étanchéité et le fond de jante 9. Après vissage, la collerette 40 a épousé la forme du fond de jante 9.

Une telle jante sur laquelle est monté un pneumatique de roulement sans chambre forme une roue à rayons pour une bicyclette, en particulier pour un vélo tout terrain, mais son utilisation peut être envisagée pour des cyclomoteurs.

## Revendications

1. Jante de roue à rayons destinée à être équipée d'un pneumatique (5) sans chambre, ladite jante (3) étant formée par au moins un anneau comprenant un fond annulaire (9) bordé de deux flancs (10) contre lesquels viennent respectivement en appui les deux talons (12) du pneumatique (5), et équipée de moyens pour assurer au moins l'étanchéité entre les talons (12) du pneumatique (5) et les flancs (10) de la jante (3), caractérisée en ce que lesdits moyens sont constitués par des moyens d'ancrage (15) interposés entre les talons (12) du pneumatique (5) et les flancs (10) de la jante (3), pour assurer l'étanchéité par incrustation des moyens d'ancrage (15) dans les talons (12) du pneumatique sous l'effet de la pression de gonflage.

2. Jante de roue selon la revendication 1, caractérisée en ce que les moyens d'ancrage (15) sont usinés sur la face interne des flancs (10) de la jante (3).

3. Jante de roue selon la revendication 2, caractérisée en ce que les moyens d'ancrage (15) sont constitués par une série de dentures (17).

4. Jante de roue selon la revendication 3, caractérisée en ce que les dentures (17) sont circulaires, concentriques et à arêtes vives.

5. Jante de roue selon l'une quelconque des revendications 1 à 4, caractérisée en ce que le fond de jante (9) comporte également deux bossages circonférentiels (20) en saillie vers l'extérieur et formant chacun une butée pour maintenir en place les talons (12) du pneumatique (5).

6. Jante de roue selon la revendication 5, caractérisée en ce que la distance séparant les faces externes des deux bossages (20) est supérieure à la distance séparant les faces internes des deux talons (12) du pneumatique (5).

7. Jante de roue selon l'une quelconque des revendications précédentes, caractérisée en ce qu'un ruban étanche (30) est rapporté sur la périphérie du fond de jante (9) pour assurer l'étanchéité au niveau des zones de raccordement entre les rayons (7) et le fond de jante (9).

8. Jante de roue selon la revendication 7, caractérisée en ce que les deux extrémités libres du ruban (30) viennent respectivement de part et d'autre d'une ouverture (32) ménagée dans le fond de jante (9) et dans laquelle est montée une valve de gonflage (35).

9. Jante de roue selon la revendication 8, caractérisée en ce que la valve de gonflage (35) comprend un corps fileté (37) et, à une extrémité, une collerette (40) en caoutchouc d'un diamètre supérieur au diamètre de l'ouverture (32) et destinée à venir en appui étanche sur le fond de jante (9) au moyen d'un écrou vissé sur le corps de valve (37).

10. Roue à rayons, en particulier pour bicyclette, VTT ou cyclomoteur, caractérisée en ce qu'elle comprend une jante selon l'une quelconque des revendications précédentes, et un pneumatique sans chambre.
